Europäisches Patentamt

European Patent Office

Office européen des brevets

(11) Publication number: **0 089 155**
**A2**

# (12) EUROPEAN PATENT APPLICATION

(21) Application number: **83301162.0**

(22) Date of filing: **04.03.83**

(51) Int. Cl.³: **B 22 F 7/08**
**B 22 F 5/04**

(30) Priority: **05.03.82 GB 8206581**

(43) Date of publication of application:
**21.09.83 Bulletin 83/38**

(84) Designated Contracting States:
**DE FR GB IT SE**

(71) Applicant: **ROLLS-ROYCE LIMITED**
**65 Buckingham Gate**
**London, SW1E 6AT(GB)**

(72) Inventor: **Conolly, Ralph Ivor**
**86 Fenshurst Gardens**
**Long Ashton Bristol(GB)**

(74) Representative: **Waite, John**
**Rolls-Royce Limited P.O. Box 3**
**Filton Bristol BS12 7QE(GB)**

(54) Composite articles and a method for their manufacture.

(57) A method of making a lightweight component in which a core made from a ceramic or ceramic/metal mixture is surrounded with metal and the whole component subjected to a hot isostatic pressing process. Examples of articles given are balls for ball bearings, aerofoil shaped blades or vanes, and poppet valves.

The core is generally pre-formed, and the metal may be in pre-pressed powder sheet metal form.

In a method of making a ball bearing an Alumina sphere 1 is surrounded by pre-pressed Iron alloy powder in the form of hemispherical shells 2, placed in a glass, ceramic or metal can 3, which is evacuated and sealed, and subjected to hot isostatic pressure in a vessel 6 to form the composite ball.

Alternative methods of manufacture are also described.

EP 0 089 155 A2

## COMPOSITE ARTICLES AND A
## METHOD FOR THEIR MANUFACTURE

The present invention relates to composite articles, and a method for their manufacture.

One problem to which the invention is applicable is that of producing a strong lightweight ball bearing. The stresses induced in rolling elements, i.e. balls and rollers, of rolling element bearings due to centrifugal force are added to those due to the load which the bearing is carrying, i.e. crushing stress and hertzian stress etc.

Attempts have previously been made to reduce the density and hence the weight of balls and rollers in order to reduce the centrifugally induced stresses thereon, and one known proposal has been the hollow ball or roller.

However, these have not been entirely successful because the wall thickness required to carry the various stresses, for any significant load carrying capacity, has been found to be such that the weight saving achieved has not justified the additional expense of the change in manufacturing technique required.

One object of the present invention is to produce a lightweight rolling element for a rolling element bearing which still maintains the strength required for heavy duty operation.

-2-

Other problems to which the invention can be directed are concerned with reducing the weight of components in gas turbine engines. For example, in a bladed rotor rotating at high speed, the rotor has to have a significant mass inside the free hoop radius to carry the weight of the blades and disc material outside that radius. Clearly any reduction in the weight of the blades and disc parts outside the free hoop radius has a dual effect in that less disc material is then required inside the free hoop radius to carry them.

In addition, any rotating component of an engine incurs stress simply due to the centrifugal effects on it, and this stress can be reduced if the weight of the component can be reduced.

A further, more general, object of the invention therefore, is to reduce the density of an article without detracting from the other mechanical properties which it requires for normal duty.

These objects and others are achieved according to the invention as claimed in the appended claims by producing a core element of the article in a lightweight material and hot isostatically pressing a metallic material of the required composition around the core.

In a preferred form of the invention the core element is made from a lightweight non-metallic material in the form of a ceramic such as Alumina, although lightweight composite materials such as glass composites or

-3-

carbon-in-carbon composites may be used instead. Throughout this specification reference to a lightweight core material is intended to mean a core material of lower density than that of the surrounding material.

The core material may be in solid form and may be machined to the appropriate core shape. Alternatively, the core material may itself be a composite material in loose powder form, or in the form of a powder which has been pre-pressed to consolidate it to give it "green" strength, or which has been sintered into a machinable solid.

One form of composite material which is suitable is a mixture of ceramic particles in a metal binder, and in a preferred form of this material the density is controlled by using spherical ceramic particles.

One method of making the articles includes the steps of pre-pressing the powder material for surrounding the core element into two parts with intermediate or "green" strength sufficient to support the core element accurately in place for the final pressing operation. The hot isostatic pressing (HIP) operation may be carried out by any suitable known technique using glass, metal, or ceramic "cans". The powder is preferably pre-pressed into shape in two metal die parts which, when assembled together, form the "can" for the HIP operation.

Alternatively some articles may be made by hot isostatically pressing sheet metal skins around the core material, in which case the sheet metal skins may form the "can" as well as the outer surface of the

-4-

finished article.

The invention will now be more particularly described with reference to the accompanying drawings in which:

Figure 1 shows an intermediate stage in the production of a ball bearing according to the present invention.

Figure 2 shows the ball bearing of Figure 1 in a vessel for the hot isostatic pressing process.

Figure 3 shows one form of aerofoil-shaped rotor blade made in accordance with the invention, and,

Figure 4 illustrates a modified aerofoil-shaped blade made in accordance with the invention.

Figure 5 illustrates a further form of aerofoil-shaped blade made in accordance with the invention, and

Figure 6 illustrates a lightweight poppet valve made in accordance with the invention.

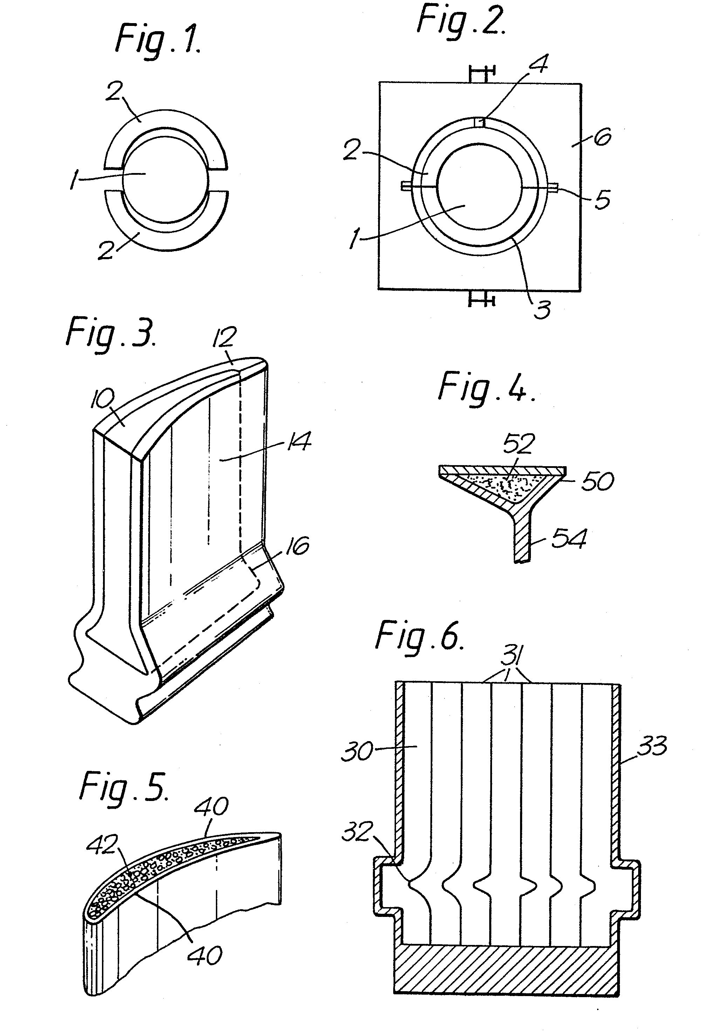

Referring now to Figures 1 and 2 a rolling element for a rolling element bearing is in the form of a ball and has a spherical core element 1 made of a ceramic material and which can readily be ground to the required accuracy in a standard ball mill. Due to the nature of the process of the invention, the accuracy of the final dimensions of the core element need not be very high provided that no significant eccentricities are introduced which might unbalance

-5-

the finished ball.  The ceramic from which the core element is made is fully treated to achieve its optimum strength and densification and is not expected to densify further during the hot isostatic pressing process.

A pair of hemispherical shells 2 are made from the powder material required for the outer skin and these are pre-pressed to an intermediate density to provide an intermediate or "green" strength for centralising and supporting the ball for the final hot isostatic pressing (HIP) process.

The shells are made by pressing the metal powder into hemispherical dies using a spherical former.  The dies may be accurately made as mild steel castings which may then be used to form the "can" for the hot isostatic pressing process.  For this purpose they are provided with flanges 5 which can be welded together to seal the "can".

Figure 2 shows the core element 1 and shells 2 assembled into two die parts in the form of hemispherical cups 3, the upper one of which contains a tube 4 for evacuation of gases.  The two cups 3 which now form the "can" for the HIP operation are fused or welded together at 5, evacuated and sealed.  This part of the operation can be conveniently carried out by electron beam welding in vacuum to avoid the need for a separate evacuation procedure.  The assembly is then placed in a standard HIP vessel 6 in which it is subjected to a hot isostatic environment with temperatures in excess of $800^{o}C$ and pressures up to 25 ksi to bond the metal powder to the ceramic.  Once removed from the HIP vessel the metal "can" is removed and the ball can be ground to its final dimensions using conventional techniques.

Although for convenience the metal dies are used to form a "can" shaped to the finished size of the article being made, the composite ball or other article may alternatively be placed in a separate glass or ceramic "can" for the HIP process.

The Hertzian stress on a ball bearing, depending on the load, usually affects the outer surface to a depth of around 0.018 ins. Thus the powder metal skin should in all cases be of a minimum thickness of 0.030 to 0.040 ins. While thicknesses of this order will produce a maximum weight reduction, other reasons may dictate thicknesses of the order of 0.100-0.150 ins.

The composite ball of the present invention could be made by alternative manufacturing methods. For example, the solid pre-formed ceramic core could be placed within two hemi-spherical sheet-metal skins of appropriate thickness and properties and subject to a HIP process. In this case the skins may themselves form the can for the HIP process and may be provided with confronting flanges for welding to seal the interior of the ball.

Alternatively the core material may be in the form of ceramic spheres intimately mixed with a metal powder binder and pre-compacted and sintered to provide sufficient strength to enable it to be ground to form a ball. The surrounding metal skin may be derived from a powder or sheet metal in this case.

It can be seen that a composite ball or roller bearing made in accordance with the invention will have a solid core enabling the ball or roller to better withstand the crushing and bending stresses occurring in operation and allowing a minimum thickness of metal in the skin to cater for the Hertzian stress.

The idea behind the composite ball bearing described above can be extended to many other composite articles, and the manufacturing routes in each case may be essentially the same.

A fan blade for a gas turbine engine is lightened as shown in Figure 3 by forming the interior with a lightweight ceramic material 10 and overlaying metallic skins 12,14 onto the ceramic by an HIP process. The ceramic is shaped at 16 to provide a mechanical lock within the metal skin should it be found necessary in the event of the bond between the ceramic and the metal breaking down.

The blade is made by initially casting dies in mild steel which define on their interiors, the shapes of the external surfaces of the blade. Metal powder in a suitable binder is pressed into the die and shaped on its exposed surface to receive the ceramic core. The ceramic core is machined from a solid pre-formed block and laid in position on top of the powder on one half of the blade. Once again the mild steel die is used to form the "can" for the HIP process and is welded around its edges to seal it before it is evacuated. After the HIP operation the metal can is removed by machining or a suitable etchant.

In a further embodiment of the invention shown in Figure 4 a core 30 of a gas turbine engine rotor blade is formed from a plurality of laminations 31 mechanically locked together by forming complementary projections 32 thereon. The laminations are packed together and held, for example, by wiring, and a metallic skin is then put around the core, in two parts prepressed to green strength as described above, to encapsulate the laminations. The composite piece is then hot isostatically pressed to form a blade. The laminations may or may not bond together but will be mechanically keyed together and to the encapsulating metal.

Again it may be advantageous if the laminations are prevented from bonding together by an initial pre-encapsulation treatment, e.g. plating, so that not only will relative movement be possible for vibration damping, but also any flaws or cracks starting in one lamination will be unable to proceed through the whole blade.

Figure 5 illustrates yet another possible combination of materials and a further alternative manufacturing technique for producing a lightweight rotor blade, particularly for a large compressor or fan blade for a gas turbine engine.

In this example, two Titanium skins 40 are produced either by pre-pressing powder into die parts as described above, or as sheet metal skins, to form the side-walls and even the root of the blade. These are clamped together and the interior of the blade filled with an intimate mixture of Silicon Carbide spheres and Titanium powder. This composite blade is then placed in a ceramic, glass or metal "can" (avoiding any material which might react with the Titanium) and subjected to an HIP process to bond the powder, spheres and skin together. If sheet metal skins are used, these can, as with the bearing described above, be formed with flanges to enable the composite blade to be evacuated and sealed by joining at the flange in order to use the skins themselves as the "can" for the HIP process. The blade can be machined after bonding to remove the flange and provide a correct aerofoil shape.

To obtain a greater weight reduction the ceramic spheres may be hollow.

As a further example of the invention a lightweight poppet valve is shown in Fig. 6 in which the head of the valve 50 contains a ceramic or ceramic/metal composite insert 52 and the remainder of the valve head and stem 54 may be made from powder, or standard valve metal, the composite valve being finally formed into a whole by a HIP process as described above.

There is a wide choice of material combinations available for the present composite articles, and the ultimate selection will necessarily depend on the environment in which the article is to operate, and the duty it is to perform. In the case of the bearing, the metal outer covering may be selected for high strength rather than corrosion resistance at high temperature, whereas in the rotor blades the ceramic material may be designed to be load-bearing, and the outer

-10-

metallic material may be selected more for the protection it provides to the ceramic rather than its strength, e.g. for impact resistance or corrosion resistance.

It may be necessary to compromise the material combinations to overcome difficulties due to differential thermal expansions between the ceramic and the metal. For example, the high strength ceramics such as Silicon Nitride which have high temperature capability also tend to have the lower co-efficients of thermal expansion. On the other hand, the glass ceramics have low strength at high temperature but can be made with higher co-efficients of thermal expansion which are more easily matched to the metal, e.g. Lithium di-Silicate quartz which has a co-efficient of thermal expansion of $14.5 \times 10^{-6}$.

An intermediate range of ceramics are materials such as alumina or zirconia which have co-efficients of thermal expansion lower than, but not too far from those of the metal which have the required mechanical properties. Where lesser mechanical properties are acceptable, however, the outer metallic layer may be made from a material with a low co-efficient of thermal expansion, for example, a material based on INVAR.

For a ball or roller bearing, a preferred combination is a form of Magnesium Silicate known as FORSTERITE and having the chemical composition $Mgo2SiO_2$, and one of the standard low density, high duty bearing metal alloys for aircraft use which has the following composition: Cr 4%, Mo 4.2%, Va 1%, C 0.8%, Fe balance.

For a turbine blade, a high strength ceramic core such as silicon nitride may be used with a standard blade alloy such as IN 100 sold by the International Nickel Company and having a composition of Co 15%, Cr 9.5%. Al 5.5%, Ti 4.75%, Mo 3%, the balance being Nickel except for very minor amounts of elements such as C, Si, and impurities.

For still lower density the core material may be made from a mixture of hollow ceramic spheres and a metal binder. Hollow Zirconia spheres are available and when mixed with metal powder can give both inherent strength and low weight. The actual volumes of the metal and ceramic spheres is a matter for trial and error in any particular case depending on the properties required.

It is also to be understood that while turbine and compressor blades and vanes have been described the invention may be applied only to parts of such blades and vanes, for example to provide a ceramic core only between the aerofoil-shaped walls.

It may not be essential for the bond between the ceramic and the metal to remain integral, and in fact in some instances it may be better if there is no bond between them. For example, the ceramic spherical core in the composite ball bearing, need not be mechanically bonded to the metal. If the bond breaks, therefore, due to differential thermal expansions between the ceramic and the metal, there should be no detrimental effect, provided the ceramic core is not able to move about within the metal skin.

In the case of a turbine or compressor blade, however, if the ceramic is not bonded to the metal, except by the mechanical lock introduced by shaping the core, the ceramic and metal will be able to move relatively to each other under vibration of the blade and provide means for damping any vibrations.

Where it is important to have an integral bond between the ceramic and the metal, one or more intermediate layers may be introduced having intermediate co-efficients or expansion to gradually equalise the expansions between the inner core and the outer layer.

It will be understood that an aerofoil blade made by the method of the present invention could incorporate any configuration of cooling holes in the core in accordance with conventional practice.

While the advantages of the invention are not limited to ceramic cores with a powder metal outer layer pressed onto it, the value of hot isostatically pressing a powder metal onto a core is that it enables the outer metallic layer to be formed around many different complex shapes of core which may be lightweight metals or which may have other properties different from those of the surrounding metal.

The brittleness of a ceramic core may be overcome by use of a glass composite which would have greater ductility. One example of such a material which would give a high temperature capability for use in a turbine blade application is high melting point glass ceramic, for example, Cordierite, which is itself a mixture of

-13-

Aluminium oxide, Magnesium oxide and Silica, together with a low density ceramic for example, Zirconia. Alternatively carbon-in-carbon composite materials may form the lightweight core.

-14-

## CLAIMS

1. A method of manufacture of a composite article comprising the steps of:

making a core element of a first material which comprises a ceramic or carbon material,

applying a metal covering to at least part of the surface of the core, and

subjecting the core with its metal covering to a hot isostatic pressing process to form the article.

2. A method as claimed in Claim 1 and in which the core element is made wholly from a pre-formed ceramic material.

3. A method as claimed in Claim 1 and in which the core element comprises a mixture of ceramic particles in a metal binder.

4. A method as claimed in Claim 3 and in which the ceramic particles are spherical in shape.

5. A method as claimed in Claim 4 and in which the spherical ceramic particles are hollow.

6. A method as claimed in Claim 3 and in which the mixture of ceramic particles in a metal binder is pre-formed to shape and sintered prior to assembly with the metal covering.

-15-

7. A method as claimed in any one of Claims 1 to 6 and in which the ceramic core is made from a material chosen from Alumina, Silica, Zirconia, Silicon Nitride, Silicon Carbide, Lithium di-Silicate quartz or Magnesium Silicate.

8. A method as claimed in Claim 1 and in which the core material is a carbon-in-carbon composite material.

9. A method as claimed in any preceding claim and in which the metal covering is formed from a powder material.

10. A method as claimed in any one of Claims 1 to 8 and in which the metal covering is applied as a metallic sheet.

11. A method as claimed in any preceding claim and in which the core with its metal covering is placed in a suitable metal, ceramic or glass can which is evacuated and sealed prior to the hot isostatic pressing process.

12. A method as claimed in Claim 10 and in which the metallic coating completely surrounds the core and itself forms the can for use in the hot isostatic pressing process.

13. A method as claimed in any one of Claims 9 to 12 and in which the metallic coating is made from a material chosen from a Nickel-, Cobalt-, or Iron-based alloy or Titanium.

14. A method as claimed in any preceding claim and in which the article is a ball for a ball bearing.

15. A method as claimed in any one of Claims 1 to 12 and in which the article is an aerofoil-shaped blade or vane.

16. A method as claimed in any one of Claims 1 to 12 and in which the article is a poppet valve.

17. A method of making a lightweight composite ball for a ball bearing as claimed in Claim 14 comprising the steps of:

making a spherical core element from a material which includes a ceramic,

making a pair of hemispherical shells from a metallic material,

enclosing the core element with the shells, and

subjecting the shells to a hot isostatic pressing process to form the composite ball.

18. A method as claimed in Claim 17 and in which the metallic material is an alloy which has the following composition in percentages by weight: Chromium 4%. Molybdenum 4.2%, Vanadium 1%. Carbon 0.8% with the balance being Iron.

19. A method as claimed in Claim 17 or Claim 18 and in which the metallic hemispherical shells are made from powder pre-pressed into die parts to a sufficient extent to provide them with green strength.

20. A method as claimed in Claim 19 and in which the die parts into which the shells are pressed are used to form the can for the hot isostatic pressing process.

21. A method for the manufacture of a lightweight compressor or fan blade for a gas turbine engine comprising the steps of:

forming two metallic skins having outer surfaces which correspond to the outer surfaces of the finished blade,

assembling the skins to form a hollow blade structure,

inserting into the hollow blade structure a mixture of metal powder and spherical ceramic particles,

sealing the hollow structure at its ends and around its edges,

evacuating the structure and subjecting it to hot isostatic pressure to form the composite blade.

22. A method as claimed in Claim 21 and in which the mixture of metal powder and spherical ceramic particles is pre-formed by pressure and sintered prior to inserting into the hollow blade structure.

23. A method as claimed in Claim 21 or Claim 22 and which the ceramic part of the blade is made from Silicon Carbide and the metal part of the blade is made from Titanium.

Fig.1.

Fig.2.

Fig.3.

Fig.4.

Fig.5.

Fig.6.